# EUROPEAN PATENT SPECIFICATION

(11) **EP 4 715 739 B1**
(45) Date of publication and mention of the grant of the patent: **09.09.2026**
(21) Application number: 24201082.5
(22) Date of filing: 18.09.2024
(51) Int. Cl.: G06T 7/246

(54) **A METHOD AND AN APPARATUS FOR TRACKING A TEMPORARILY OCCLUDED OBJECT IN A PLURALITY OF IMAGE FRAMES DEPICTING A SCENE**
VERFAHREN UND VORRICHTUNG ZUR VERFOLGUNG EINES VORÜBERGEHEND VERDECKTEN OBJEKTS IN EINER VIELZAHL VON BILDRAHMEN, DIE EINE SZENE DARSTELLEN
PROCÉDÉ ET APPAREIL POUR SUIVRE UN OBJET TEMPORAIREMENT OCCLUS DANS UNE PLURALITÉ DE TRAMES D'IMAGE REPRÉSENTANT UNE SCÈNE

(43) Date of publication of application: 25.03.2026
(73) Proprietor: Axis AB, 223 69 Lund (SE)
(72) Inventor: Danielsson, Niclas, 223 69 LUND (SE); Laross, Sarah, 223 69 LUND (SE); Colliander, Christian, 223 69 LUND (SE); Ljungqvist, Martin, 223 69 Lund (SE)
(74) Representative: AWA Sweden AB

(56) References cited:
- US-A1- 2014 347 475
- STADLER DANIEL ET AL: "Improving Multiple Pedestrian Tracking by Track Management and Occlusion Handling", 2021 IEEE/CVF CONFERENCE ON COMPUTER VISION AND PATTERN RECOGNITION (CVPR), IEEE, 20 June 2021 (2021-06-20), pages 10953 - 10962, XP034008751, DOI: 10.1109/CVPR46437.2021.01081
- STADLER DANIEL ET AL: "An Improved Association Pipeline for Multi-Person Tracking", 2023 IEEE/CVF CONFERENCE ON COMPUTER VISION AND PATTERN RECOGNITION WORKSHOPS (CVPRW), IEEE, 17 June 2023 (2023-06-17), pages 3170 - 3179, XP034398174, DOI: 10.1109/CVPRW59228.2023.00319
- YANG JIEMING ET AL: "Online multi-object tracking using multi-function integration and tracking simulation training", APPLIED INTELLIGENCE, KLUWER ACADEMIC PUBLISHERS, DORDRECHT, NL, vol. 52, no. 2, 19 May 2021 (2021-05-19), pages 1268 - 1288, XP037673632, ISSN: 0924-669X, [retrieved on 20210519], DOI: 10.1007/S10489-021-02457-5

## Description

### Technical field

The present invention relates to the field of object tracking. Especially, it relates to a method and an apparatus for tracking a temporarily occluded object in a plurality of image frames depicting a scene.

### Background

In object tracking, object re-identification can be used when associating object detections with existing tracks. For example, it can be used when a tracked object, temporarily occluded in one or more image frames, reappears in a subsequent image frame and its detection should be associated with an existing track. In that way, one can reduce the risk of erroneous associations that lead to identity switches between the tracked objects. Re-identification can also be used in a multi-camera setting to reconnect object tracks as the object moves from one camera's field of view to another camera's field of view.

Object re-identification may be based on feature extraction which is a concept in computer vision and image processing wherein computer resources are used to extract image features. The features are used to describe patterns, and each dimension of a feature can describe a pattern from a different perspective. By comparing the similarity or distance between features extracted from two images, the two images can be concluded to depict the same object if the features are similar enough, e.g. fulfilling a similarity or distance condition. Preferably, the feature extraction is performed only on the part of the image depicting the object. Thereby, the extracted features will represent the object more accurately than if the feature extraction is performed on an entire image comprising other objects in addition to the object of interest. The extracted features may comprise colour feature, texture feature, shape feature and spatial relationship feature. In the field of image recognition or image re-identification, traditional methods or deep learning methods can be used to extract the features from the images. For example, the traditional methods of feature extraction include Histogram of Oriented Gradient (HOG), Scale-Invariant Feature Transform (SIFT), Speeded Up Robust Features (SURF), Local Binary Pattern (LBP), and the deep learning methods of feature extraction include Convolution Neural Network (CNN), Recurrent Neural Network (RNN), just to give some examples.

Extracted features may be given as a vector, often referred to as a feature vector, appearance vector or a re-identification vector. Thus, the feature vector may be an n-dimensional vector of features extracted from an image of the object to represent the appearance of the object in the image. The feature vector may be a vector of numbers or a string of characters. In some deep learning methods, the features are extracted from images by e.g. a CNN and given as output from the CNN, while in other such methods, the CNN takes two images as input and gives as a single output a number, e.g. a similarity score, representing a, by the CNN, determined similarity between the two input images.

An object track may be determined for each object tracked in the scene by associating instances, detected in captured image frames, of the same object at different locations across the different parts of the scene and/or across different camera field of views. In object re-identification, detected instances are determined to belong to the same object when they have similar feature vectors.

A known problem in object tracking is object occlusions. When an object is occluded, the track of the object will be lost temporarily. As the object appears again it can be associated with its old track using object re-identification, at least if it was not occluded for too long time. Usually, when an object track has not been associated with a detection it is kept for a time-out period and if it is not associated with a detection within the time out period the object track is deleted. Thus, when an object is occluded for too long, it is occluded for a time period longer than the timeout period, causing its old track to be deleted and therefore no re-identification will be possible. Consequently, a new track for the object would be initiated after the occlusion and the information about the object and its movement before the occlusion is lost.

A particular situation in which occlusions are prone to occur is when objects move in groups so that the objects occlude each other from time to time. This can happen both in a one-camera setting and in a multi-camera setting. For instance, two objects that move together in a first field of view may be tracked. As they enter a second field of view, a first object may be occluded by a second object due to different view angles of the cameras. As a result, only the track of the second (occluding) object will be reconnected to the track in the previous camera view (possibly requiring object re-identification to determine which track in the previous camera view it should be reconnected to), while the track of the first (occluded) object will be lost.

In US 10,268,900 B2 it is disclosed to define an occlusion zone for each person being tracked. If a first person is detected as moving along a track that intersects with an edge of the occlusion zone of a second person, the track of the first person is linked with the occluding track of the second person for the duration of the occlusion, that is, while the first person is within the occlusion zone of the second person. This allows a tracking module to maintain tracks for heavily occluded persons as long as the tracks can be assumed to be in the occlusion zone of another tracked person. When the track reappears on the boundary of the occlusion zone as a new track, the new track's identity is recovered from all possible tracks that have been occluded by the occlusion zone, and the new track is linked with the occluded track by checking the appearance model and motion model (e.g., a viable kinematics model) for each tracked object. Thus, when the track reappears on the boundary of the occlusion zone only occluded tracks are considered as candidate tracks for reidentification.

The document "Improving Multiple Pedestrian Tracking by Track Management and Occlusion Handling" (D. Stadler and J. Beyerer, 2021 IEEE/ CVF Conference on Computer Vision and Pattern Recognition (CVPR), Nashville, TN, USA, 2021, pp.10953-10962, doi: 10.1109/CVPR46437.2021. 01081) introduces the concept of occluding and occluded tracks for re-identifying occluded pedestrians and determines whether a new detection belongs to a previously found occluded track by only considering its motion without performing reidentification. In the described multi-object tracking, occlusions between two objects are handled by marking a first track as occluding a second track, and the second track as occluded by the first track. The first track stays active, and the second track turns inactive. When a new object detection arrives and an occlusion track pair exists, a centre position of the detection is compared with an estimated position of the occluded inactive track. If a distance between the two positions is below a threshold, the inactive track gets re-activated by the new detection.

### Summary of the invention

It is an objective of the present invention to improve occlusion handling of tracked objects that move in groups.

According to a first, second and third aspect of the inventive concept, the above objective is achieved by a method, an apparatus and a non-transitory computer-readable medium, respectively, for tracking a temporarily occluded object in a plurality of image frames depicting a scene as defined in the independent claims.

Advantageous embodiments are defined in the dependent claims.

According to the inventive concept, after determination that a first object track of detected instances of a first object, but not a second active object track of detected instances of a second object moving together with the first object in the scene, has become inactive for a current image frame due to not being associated with a detected instance of the first object in one or more image frames, the inactive first object track is connected to the active second object track. In the subsequent tracking, a detected subsequent instance of an object is associated with an inactive object track when a similarity score between the detected subsequent object instance and one or more object instances of the inactive object track fulfills a similarity requirement, wherein the similarity requirement is less strict when the detected subsequent object instance is spatially proximate to the active second object track and when the detected subsequent object instance is compared to one or more object instances of the inactive first object track connected to the active second object track as compared to when the detected subsequent object instance is compared to one or more object instances of an inactive object track unconnected to the active second object track.

The similarity score is a measure of similarity in appearance between the compared object instances. The similarity score may be a value between 0 and 1, wherein a similarity score of 0 indicates that the compared object instances lack similarity and a similarity score of 1 indicates that the compared object instances are identical. The similarity score may be determined by comparing one or more detected subsequent object instances of the detected object with one or more object instances of the inactive object track. For example, the similarity score may be determined as a measure of similarity between one or more feature vectors of one or more detected subsequent object instances of the detected object and one or more feature vectors of one or more object instances of the inactive object track. As another example, the similarity score may be obtained as an output from a CNN taking one or more detected subsequent object instances as input and comparing it/them with one or more instances of the inactive object track.

In this disclosure, a reference to "a detected subsequent instance of an object" should be understood as "one or more detected subsequent instances of an object". Thus, a set of detected subsequent object instances, which may have been associated into a subsequent object track, may be compared with the one or more object instances of the inactive object track to determine whether or not the similarity requirement is fulfilled. Consequently, the subsequent object track may be associated with the inactive object track when it has been concluded that the similarity score for the compared object instances fulfills the similarity requirement.

By using a similarity requirement that is less strict when the detected subsequent object instance is spatially proximate to the active second object track and when the detected subsequent object instance is compared to one or more object instances of the inactive first object track connected to the active second object track, the method is more prone to associate the detected subsequent object instance to the inactive first object track than to another inactive object track not being connected to the active second object track. Thereby, it is more likely that the detected subsequent object instance is associated with the inactive first object track than with another inactive object track. This is advantageous since the tracking of the temporarily occluded object moving together with the second object can be resumed and the inactive first object track can be re-activated by associating the detected subsequent object instance with the first object track resulting in a reactivation of the first object track.

Even if the present invention is more prone to associate the detected subsequent object instance spatially proximate to the active second object track with the inactive first object track connected to the active second object track thanks to the less strict similarity requirement it should be understood that the present invention does not exclude an association of the detected subsequent object instance to another inactive object track. Thereby, increasing the chances of finding correct associations and reducing the risk of falsely starting new object tracks.

The first, second and third aspects may generally have the same features and advantages. It is further noted that the invention relates to all possible combinations of features unless explicitly stated otherwise.

By "temporarily occluded object" is meant a tracked object, e.g. the first object moving together with the second object, which object has been detected and tracked for a preceding time period and has become undetectable for a subsequent time period before it is detected again. This can be due to another object, such as another tracked object, e.g. the second object with which the first object is moving, or a stationary object e.g, a tree or a wall just to give some examples, occluding the tracked object from the camera view for the subsequent time period. Alternatively, or additionally, the temporarily occlusion may be due the tracked object moving from one imaging field of view to another imaging field of view wherein the tracked object is not detectable until after the subsequent time period. The temporarily occluded object may also be referred to as a temporarily undetected object or temporarily undetectable object.

The "tracked object" is a movable object whose activity is capable of being tracked, e.g., a person or a vehicle that is capable of changing geographical location or position in the scene.

By "scene" is meant a geographical area provided with one or more imaging devices for monitoring thereof. The geographical area may be an indoor area, an outdoor area or a combined indoor and outdoor area wherein surveillance is performed using the one or more imaging devices.

An object track can have different statuses. For example, it can be "active" or "inactive". An active object track is an object track that has been associated with a detected object instance in one or more image frames of a set of latest image frames. The one or more image frames may correspond to a predefined number of image frames in the set of latest image frames. In some implementations, the predefined number may correspond to all image frames in the set of latest image frames. In other implementations, the predefined number may correspond to less than all of the image frames of the set of latest image frames. When the condition for being active is no longer fulfilled, an active object track changes status to inactive. An inactive object track is an object track that has not been associated with a detected object instance in one or more image frames (e.g., the predefined number of image frames mentioned above) of the set of latest image frames. The set of latest image frames may here correspond to a predefined number of latest image frames, such as the image frames captured during a time period of duration between 0.5 and 2 seconds preceding a current point in time. Further, an object track which has not been associated with any detected object instance for a time-out period (or longer duration than the predefined number of latest image frames) may be deleted.

An inactive object track connected to an active object track is sometimes herein referred to as being an inactive and connected object track, or just as an inactive connected object track.

By "detected instances of an object" is meant a number of detected occurrences of the object in the same number of image frames such that there is one detected instance/occurrence of the object in each image frame of the number of image frames. Thus, there is a one-to-one relationship between the number of detected instances of the object and the number of image frames. A detected instance of an object in an image frame is the same as a detection of the object in the image frame. Hence a detected instance of an object/a detected object instance may also be referred to as an object detection, and the terms may be used interchangeably.

By "moving together" is meant that the objects, i.e. the first and second objects, are moving as a group in the scene and that they are changing geographical location in the scene in such a manner that their respective movement pattern and movement direction are close to and follow each other over the same period in time. For example, two objects may be determined to move, e.g. walk, together in the scene, when their object tracks, during a same (predetermined) period in time, are located in proximity to each other (e.g. within a predetermined distance) and have a similar trajectory.

By "similarity requirement" is meant a requirement on how similar two or more detected object instances must be to be concluded as belonging to the same object. For this, the previously mentioned similarity score may be used. As mentioned, the similarity score may be determined by comparing one or more detected subsequent object instances with one or more object instances of the inactive object track. For example, it may be determined as a measure of similarity between one or more feature vectors of one or more detected subsequent object instances of the detected object with one or more feature vectors of object instances of the inactive object track. As another example, the similarity score may be obtained from a CNN taking one or more detected subsequent object instances as input and comparing it/them with one or more instances of the inactive object track and giving the similarity score as an output to indicate a similarity between the compared object instances. When the determined similarity score fulfills the similarity requirement, the compared object instances are concluded to belong to the same object. Thus, the similarity requirement may be seen as a requirement on how similar two object instances must be in order to be concluded as belonging to the same object. For example, the similarity requirement may be that a similarity, e.g. the similarity score, is equal to or above a similarity threshold. A similarity requirement using a higher similarity threshold thus requires the compared object instances to be more similar in order for the requirement to be fulfilled, while a lower similarity threshold requires a less similarity between the compared object instance to fulfil the similarity requirement.

By "similarity requirement that is less strict" is meant that the requirement is made more permissive to conclude that compared object instances or feature vectors belong to the same object even if they are not as similar as in the case of a stricter similarity requirement. For example, a less strict similarity requirement may apply a lower similarity threshold than a more strict similarity requirement. Fulfillment of a stricter similarity requirement requires a higher similarity between the object instances or feature vectors being compared than fulfillment of a less strict similarity requirement. In other words, a higher similarity in appearance between two object instances is needed to fulfil a more strict similarity requirement than a less strict similarity requirement.

By "spatially proximate" is meant that the detected subsequent object instance is close in space, e.g. within a predetermined threshold, to the active second object track. For example, the detected subsequent object instance may be said to be spatially proximate to the active second object track when an instance distance between the detected subsequent object instance and one or more instances of the active second object track is determined to be below a proximate threshold. Thus, the detected subsequent object instance can be said to be spatially near the active second object track, and in particular to one or more detected object instances of the active second track.

### Brief description of the drawings

The above, as well as additional objects, features and advantages of the present invention, will be better understood through the following illustrative and non-limiting detailed description of embodiments of the present invention, with reference to the appended drawings, where the same reference numerals will be used for similar elements, wherein:
Figure 1 schematically illustrates an exemplary scene wherein embodiments of the present invention are applicable.
Figure 2A schematically illustrates an exemplifying sequence of image frames.
Figure 2B schematically illustrates four object tracks including their associated detected object instances and three detected object instances not yet associated with an object track.
Figure 2C schematically illustrates four object tracks including their associated detected object instances and three detected object instances not yet associated with an object track.
Figure 3 schematically illustrates an apparatus for tracking a temporarily occluded object in a plurality of image frames depicting a scene according to embodiments.
Figure 4 is a flowchart of a method for tracking a temporarily occluded object in a plurality of image frames depicting a scene according to embodiments.
Figure 5 schematically illustrates a system for tracking a temporarily occluded object in a plurality of image frames depicting a scene according to embodiments.

### Detailed description of embodiments

The present invention will be described more fully hereinafter with reference to the accompanying drawings, in which embodiments of the invention are exemplified. The apparatuses, devices and systems disclosed herein will be described during operation.

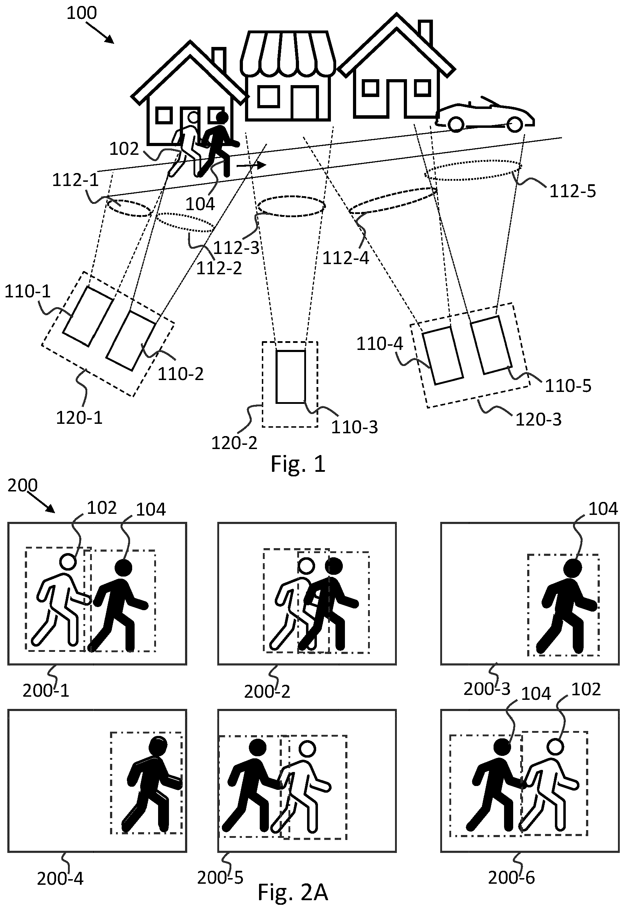

**Figure 1** shows a schematic diagram of **an exemplary scene 100** in which various embodiments of the invention can be implemented. As can be seen in figure 1, the exemplifying scene 100 comprises three houses, a parked car, and a road. Figure 1 also illustrates two **objects 102, 104,** represented as two persons, walking together on the road in the direction indicated by the arrow.

A **plurality of image sensors 110-1, 110-2, 110-3, 110-4** and **110-5** are arranged to capture image frames of the scene 100. As can be seen in Figure 1, each image source has a respective **field of view 112-1, 112-2, 112-3, 112-4, 112-5** capturing a respective part of the scene 100. The term field of view refers to the part of the scene that is captured by the image sensor at a particular position and orientation in space of the image sensor. In this disclosure, the reference numbers 110-1, ..., 110-x is used when referring to a specific one of the x image sensors and the reference number 110 is used as a general reference to one or more of the image sensors. The same is true for other components and reference numbers used herein.

One or more of the image sensors 110 may be comprised in **an imaging device 120.** Figure 1 illustrates a first imaging device 120-1 comprising two image sensors 110-1, 110-2, a second imaging device 120-2 comprising a single image sensor 110-3, and a third imaging device 120-3 comprising two imaging sensors 110-4, 110-5. The imaging device 120 may be a monitoring camera, sometimes also referred to as surveillance camera. Further, the camera may be a fixed camera, e.g. a stationary camera, or a movable camera, e.g. a pan, tilt and zoom (PTZ) camera. The camera may be a visible light camera, a thermal camera, or a camera comprising both a visible light camera and a thermal camera. Alternatively, or additionally, the camera may comprise radar and/or lidar technology. In this disclosure the terms imaging device and camera/monitoring camera will be used interchangeably. In addition to the at least one image sensor being comprised in the camera, the camera comprises further components which are known to the person skilled in the art and therefore not described herein.

**A plurality of image frames 200** (cf. Fig 2A which will be described below) may be obtained from one or more image sensors 110 of the plurality of image sensors 110. Thus, the plurality of image frames 200 may be captured by one image sensor 110 registering image data from a single field of view 112 of the scene 100 or by a plurality of image sensors 110-1, 110-2, 110-3, 110-4, 110-5 registering image data from a plurality of fields of view 112-1, ..., 112-5 of the scene 100. The one or more image sensors 110; 110-1, ..., 110-5 may be comprised in one or more monitoring cameras 120; 120-1, 120-2, 120-3. Thus, it should be understood that the scene may be monitored by one camera comprising one or more image sensors or by several cameras each comprising one or more image sensors. In the latter case, the plurality of cameras may have different numbers of image sensors. It should also be understood that the plurality of image frames does not have to be a sequence of image frames from a single image sensor but could be a sequence of image frames from a plurality of image sensors. By "sequence of image frames" is meant that the image frames are arranged in temporal order. Thus, even if the image frames are captured by several cameras monitoring the scene with the same or different field of views, the image frames may be arranged in temporal order using synchronized clocks of the cameras.

**Figure 2A** schematically illustrates an exemplifying sequence of six image frames 200; 200-1, 200-2, 200-3, 200-4, 200-5, 200-6 arranged in temporal order. Even if the illustrated image frames are arranged in temporal order, it should be understood that one or more temporally intermediate image frames may exist between one or more of the illustrated image frames and that the number of image frames in the sequence may be many more than those illustrated. For example, in some applications, the number of frames captured by an image sensor per second is 30. Thus, a sequence of image frames captured during one minute would comprise 1800 image frames. Further, in order to keep the illustrated image frames 200 clear and simple, only a first object 102 and a second object 104 are depicted.

As illustrated in the exemplifying sequence of image frames 200-1 to 200-6, the first and second objects 102, 104 are walking together. In the sequence of image frames, it looks like the first object 102 is walking behind the second object 104 in the first two image frames 200-1, 200-2 and in front of the second object 104 in the last two image frames 200-5, 200-6. However, in the third and fourth image frames 200-3, 200-4 the first object 102 is occluded by the second object 104. In such image frames 200-3, 200-4, the first object 102 may be referred to as an occluded object and the second object 104 may be referred to as an occluding object.

It is not illustrated, but the first object 102 may be occluded by another object different from the second object 104. For example, in one field of view 112, the first object 102 may be occluded by a tree, a car, a wall or another person, just to give some examples. Alternatively, or additionally, the first object 102 may be occluded by being undetectable for a time period when moving from one imaging field of view to another imaging field of view.

In the illustrated example, the second image sensor 110-2 may have captured the first and second image frames 200-1, 200-2, the third image sensor 110-3 may have captured the third and fourth image frames 200-3, 200-4 while the first and second objects 102, 104 were standing still or walking side by side perpendicular to the optical axis of the third image sensor 110-3, and the fourth image sensor 110-4 may have captured the fifth and sixth image frames 200-5, 200-6 wherein the first object 102 has passed by the second object 104 and is walking in front of the second object 104.

When object tracking is performed, detected instances of an object in a sequence of image frames are associated to form an object track if the detected object instances are determined to belong to the same object with a certain confidence. For this, standard Kalman-based tracking based on position and shape of detection boxes may be used to conclude that object detections in different image frames belong to the same object. In addition, to resolve ambiguous situations or to revive tracks following an occlusion, feature vectors may be extracted from the detected object instances and used to determine whether the detected object instances belong to the same object. Once the detected object instances have been concluded to belong to the same object and associated into an object track, one or more of the feature vectors may be stored and later used when a feature vector of a subsequent object detection is compared with the object track, as will be described in more detail below.

Even if an instance of an object doesn't have to be detected in each image frame it should be noted that for each object only one instance could exist in one image frame. Figure 2A schematically illustrates dashed detection areas for the detected instances of the first object 102 and dash-dotted detection areas for the detected instances of the second object 104. The detection area is sometimes referred to as a bounding box. It should be understood that the detection area does not have to have the shape of a box but could take any shape surrounding the detected object instance or a part thereof.

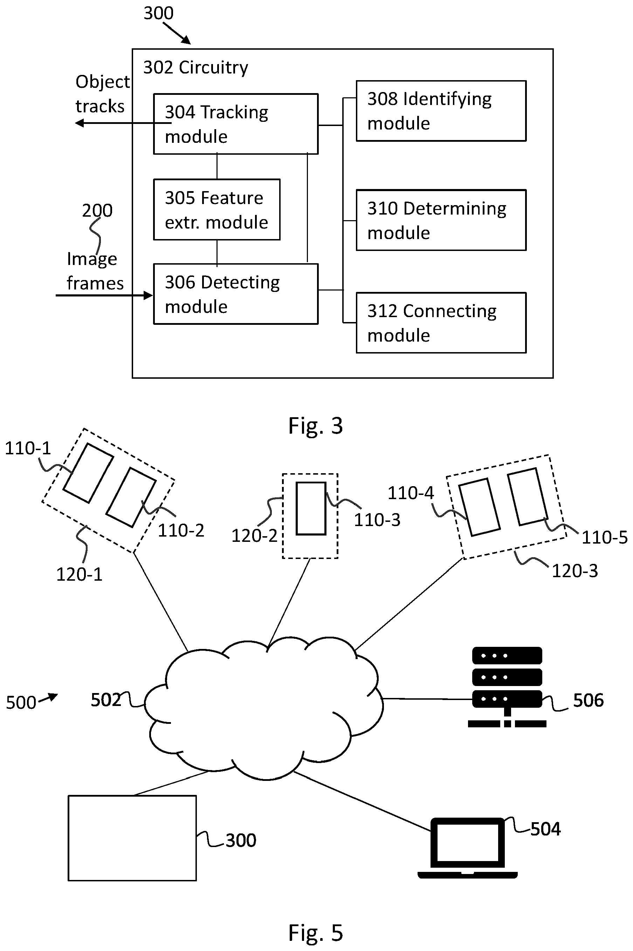

**Figure 3** illustrates **an apparatus 300** for tracking a temporarily occluded object in a plurality of image frames 200 depicting the scene 100. The apparatus 300 comprises **circuitry 302** which is configured to carry out the described method for tracking a temporarily occluded object in a plurality of image frames 200 depicting the scene 100. The circuitry 302 is configured to execute different functions of the apparatus 300. These functions correspond to a **tracking module, e.g. an object tracker, 304, a detecting module, e.g. an object detector, 306, an identifying module 308, a determining module 310** and **a connecting module 312.**

In a hardware implementation, each of the functions 304, 306, 308, 310, 312 may correspond to circuitry which is dedicated and specifically designed to execute the function. The circuitry 302 may be in the form of one or more integrated circuits, such as one or more application specific integrated circuits or one or more field-programmable gate arrays. By way of example, the tracking module 304 may thus comprise circuitry which, when in use, determines a track of an object detected in a sequence of image frames.

In a software implementation, the circuitry 302 may instead be in the form of a processor, such as a microprocessor, which in association with computer code instructions stored on a (non-transitory) computer-readable medium such as a non-volatile memory, causes the apparatus to carry out any method disclosed herein. Examples of non-volatile memory include read-only memory, flash memory, ferroelectric RAM, magnetic computer storage devices, optical discs, and the like. In a software case, the functions 304, 306, 308, 310, 312 may thus each correspond to a portion of computer code instructions stored on the computer-readable medium, that, when executed by the processor, causes the apparatus 300 to execute the function.

It is further understood that some of the functions 304, 306, 308, 310, 312 are purely implemented in hardware, and others in software which is stored on a computer-readable medium and executed by a processor.

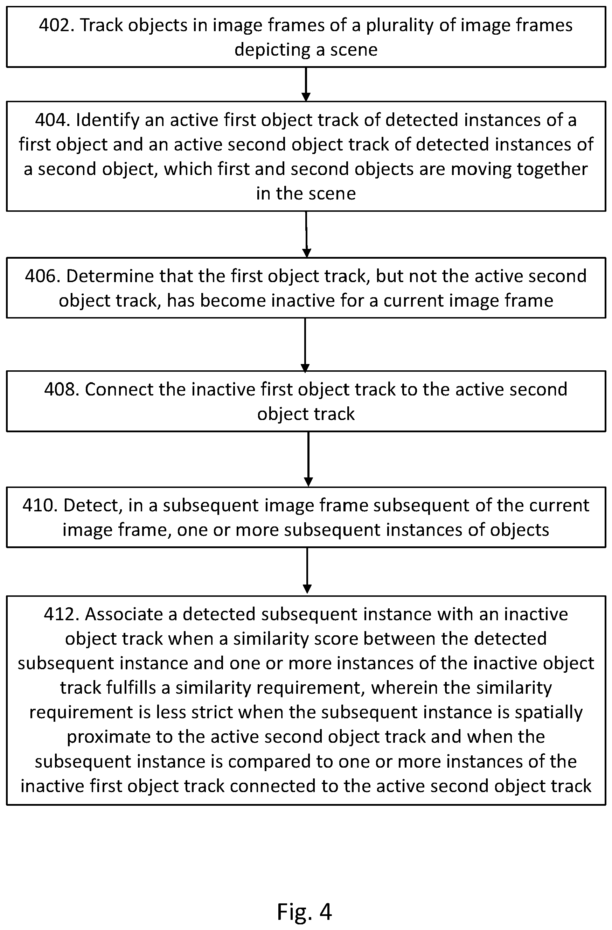

A **method for tracking a temporarily occluded object** in a plurality of image frames depicting a scene 100, will now be described with reference to the flowchart of **Figure 4****.**

In **action 402,** objects in image frames of the plurality of image frames 200 are tracked by detecting instances of objects in the image frames and associating detected instances into object tracks. According to the present invention, an object track is active when being associated with detected instances of an object in the image frames and wherein an active object track becomes inactive when it is not associated with a detected instance of an object in one or more image frames. As previously mentioned, an active object track is an object track that has been associated with a detected object instance in one or more image frames of a set of latest image frames. The one or more image frames may correspond to a predefined number of image frames in the set of latest image frames. In some implementations, the predefined number may correspond to all image frames in the set of latest image frames. In other implementations, the predefined number may correspond to less than all of the image frames of the set of latest image frames. When the condition for being active is no longer fulfilled, an active object track changes status to inactive. The tracking (action 402) may be performed by the tracking module 304 comprising or being connected to the detecting module 306 and being configured to track objects by associating detected object instances of the same object to the same object track. The detecting module 306 is configured to detect object instances in image frames and to feed detected object instances to the tracking module 304.

The detecting module 306 may take a single image frame as input and provide one or more object detections (i.e. detected object instances) and possibly also one or more feature vectors, of one or more objects in the image frame as output. An object detection may be in the form of an area in the image frame where the object is detected, referred to herein as a detection area, and may be given in the form of a bounding box. In addition to a detection area and a possible feature vector, the detecting module 306 may provide further information of the object detection, such as object class and confidence score of the object classification. The detecting module 306 may be configured to detect objects of one or more specific types or object classes, such as persons, vehicles, etc. For this purpose, the detecting module 406 may detect objects by extracting features in the image frame. That is, it may detect objects based on their appearance in the image frame.

Accordingly, the detections of the detecting module 306 may be said to be feature-based or appearance-based object detections. For example, the detecting module 306 may implement or be connected to a module comprising a deep learning model which has been trained to detect objects of one or more specific object classes of interest. Many such models are known in the art, such as the YOLO object detector (https://arxiv.org/abs/1506.02640 Redmon et al, "You Only Look Once: Unified, Real-Time Object Detection") which implements a convolutional neural network for this task.

The tracking module 304 may take the object instances detected by the detecting module 306 as input and based on the size and location of the detection area of each detected object instance associating the detected object instances into object tracks. Additionally, when performing re-identification, the tracking module 304 may extract feature vectors from the detected object instances, but it could also receive feature vectors extracted from detected object instances from a feature extraction module 305 connected to the tracking module 304. A Convolutional Neural Network (CNN) with a triplet loss may be used for extracting feature vectors. For example, a CNN such as TriNet (https://arxiv.org/pdf/1703.07737 Hermans, et al, "In Defense of the Triplet Loss for Person Re-Identification") may be used. The feature vectors of the detected object instances are then compared to feature vectors of one or more object tracks and a detected object instance is associated with an object track if it is concluded that their compared feature vectors are similar within a predefined measure and the detected object instance is close enough, i.e. spatially proximate, to the object track in the scene. Thus, the tracking module 304 may implement tracking based on feature vectors extracted from detected object instances. Further, the tracking module 304 may be configured to store, for each object track, a respective feature vector of one or more detected object instances associated with the object track or one or more feature vectors determined to be representative for the object track. Thus, the tracking module 304 may keep one or more feature vectors for each object track which may be used in the re-identification process of the temporarily occluded object when comparing a detected subsequent object instance with one or more object instances of an existing object track. The tracking module 304 has information about the status of the object tracks and therefore knows if an object track is active or inactive. The tracking module 304 may be configured with one or more timers to be associated with a respective object track when it becomes inactive. Thereby, the tracking module 304 may determine for how long time an object track has been inactive and delete the track upon expiry of a time-out period.

Additionally, the tracking module 304 may implement a tracking filter, such as a Kalman filter, that predicts, based on a motion model, a predicted subsequent object instance, and compares the predicted subsequent object instance with a detected subsequent object instance. If the predicted subsequent object instance and the detected subsequent object instance are determined (e.g. by determination of spatial similarity and/or feature vector similarity) to relate to the same object, the detected subsequent object instance is associated with the existing object track.

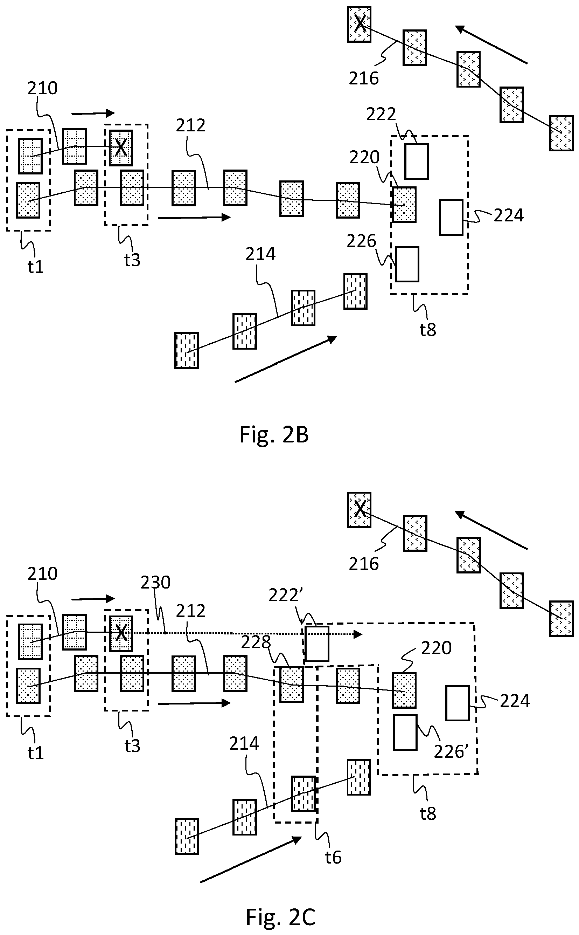

**Figure 2B** schematically illustrates four **object tracks 210, 212, 214, 216** and three **detected object instances 222, 224, 226** not yet associated with an object track. The first and fourth object tracks 210, 216 are inactive object tracks as indicated by an X in their respective last detection area, and the second and third object tracks 212, 214 are active object tracks. The detection areas of the object instances making up each object track are illustrated as rectangular boxes, and the arrows indicate the direction in which each object track develops over time and thus also in which direction the tracked object, associated with the object track, is (assumed to be) moving. Further, the dashed boxes surrounding some of the detected object instances are drawn to indicate that the object instances are detected at the same point in time, e.g. in the same image frame. The illustrated time points are a first, a third and an eighth time point t1, t3 and t8, respectively.

In **action 404,** a pair of active object tracks of two objects moving together in the scene are identified by identifying, among the object tracks, an active first object track of detected instances of a first object and an active second object track of detected instances of a second object, which first and second objects are moving together in the scene.

The identifying (action 404) may be performed by the identifying module 308 configured to identify active object tracks among a set of object tracks, and especially, to identify pairs of active object tracks that are moving together in the scene. Thus, the identifying module 308 is configured to differentiate between active and inactive object tracks in the set of object tracks. The identifying module 308 may be connected to or comprised in the tracking module 304.

In figure 2B, the first object track 210 and the second object track 212 are determined as active object tracks at **a time point t3** corresponding to detection of their respective third object instance in a third image frame. The first and second objects are moving together. In the illustrated example, the first object track 210 and the second object track 212 started at **a time point t1.**

The first and second objects may be determined to move together when the first object track 210 and the second object track 212 during a same time period, e.g. the time period between the time points t1 and t3, are located spatially close to each other and have a similar trajectory. Thus, in some embodiments, the method further comprises the action of determining that the first and second objects are moving together in the scene when the first and second object tracks, e.g. the object tracks 210, 212, during a same period in time, e.g. t3-t1, are located in proximity to each other and have a similar trajectory.

In some embodiments, it may be determined that the first and second object tracks, e.g. the object tracks 210, 212, are located in proximity to each other by determining a spatiotemporal overlap between at least one detection area of a detected instance in the first object track and a detection area of a detected instance in the second object track. Thus, even if it is not illustrated in Figure 2B, one or more of the three detection areas of the first object track 210 could be overlapping with a temporally related detection area of the second object track 212. As previously mentioned, the detection area may be a bounding box surrounding the detected object instance or a part thereof.

Alternatively, in some embodiments, it may be determined that the first and second object tracks, e.g. the object tracks 210, 212, are located in proximity to each other by determining that a pixel distance between a centre point of one or more detected instances of the first object track and a centre point of one or more detected instance in the second object track is below a predefined pixel distance threshold. In arrangements comprising several cameras located at geographically different position it may be advantageous to determine the distance between the centre points as the detection areas of the detected object instances may not be overlapping. In such arrangements, the distance between the centre points of the detection instances may be determined in a coordinate system that is common for the cameras detecting the instances. The predefined pixel distance threshold may be determined to be a static threshold value or a dynamic threshold value. The static threshold value may be a fraction of the image resolution, e.g., 1/10th of the field of view, and the dynamic threshold value may be a scaling of the detection areas such that the threshold is expressed in terms of a multiple of the estimated sizes of the objects, possibly further scaled by the track speed or velocity so that the threshold can be expressed in terms of a time distance between the objects.

The spatiotemporal overlap or the centre point distance may be determined for detected object instances in the current image frame or in one or more preceding image frames preceding the current image frame. Thus, the first and second object tracks may be located in proximity to each other in a current time point and/or in one or more preceding time points. Thereby, allowing the first and second object tracks to deviate from being proximate to each other in every image frame, as it can be when two objects are moving together, but still be considered as object tracks located in proximity to each other.

Further, in some embodiments, the first and second object tracks may be determined to have a similar trajectory by comparing the respective shape and extension of the first and second object tracks over a same period in time and if the respective shape and extension correspond to each other, the first and second object tracks are determined to have a similar trajectory.

In **action 406,** it is determined that one, e.g. the object track 210, of the active object tracks in the pair of active object tracks has become inactive. Thus, in action 406 it is determined that the first object track, but not the active second object track, has become inactive for a current image frame due to not being associated with a detected instance of the first object in one or more image frames.

In Figure 2B it is schematically illustrated that the first object track 210 has become inactive for a current frame, e.g. the fourth image frame, since it has not been associated with a detected object instance. In figure 2B, the X in the third instance of the first object track 210 indicates that the first object track 210 is inactive. As can be seen, the second object track 212 is active and new detected subsequent object instances are associated to the second object track 212.

The determination (action 406) may be performed by the determining module 310 configured to determine that an active object track has become inactive due to not being associated with a detected instance of the first object in one or more image frames. Thus, when an active object track is not associated with a detected instance of the first object in one or more image frames the status of the object track changes from active to inactive. For example, if the active track has not been associated with a detected instance for a predefined number of images frames among a set of latest image frames, the active object track becomes inactive. An inactive object track may be considered as relating to a temporally occluded object and may become active again once the object is detected again and thus not occluded anymore.

A reason for not being associated with a detected instance of the first object in the one or more image frames may be that the first object is completely occluded/undetected in the one or more image frames and thus no instance of the object will be depicted in the one or more image frames. Another reason could be that the first object is partly occluded or only partly detected and thus only a part of the instance of the object will be depicted in the one or more image frames. If this part is too small, it may not be detected as an instance of an object, or it may be detected as a part of an instance of an object, but it may not be possible to identify to which object it belongs and thus it could not be associated with an object track.

Since the active first and second objects were identified as being moving together in action 404, it is assumed that the now occluded first object associated with the now inactive first object track, e.g. object track 210, continues to move together with the second object associated with the active second object track, e.g. object track 212. Therefore, in **action 408,** the inactive first object track is connected to the active second object track. The inactive first object track may be connected to the active second object track by identifying or indicating existence of the inactive first object track in metadata associated with the active second object track and/or by identifying or indicating existence of the active second object track in metadata associated with the inactive first object track. Thereby, a link is provided between the inactive first object track and the active second object track. Alternatively, or additionally, it may be possible to introduce a further track state which indicates that the inactive first object track which is connected to the active second object track is inactive but connected to another track. Such a state may be referred to as an inactive and connected state or just as an inactive connected state.

The connecting (action 408) of the first object track to the active second object track may be performed by the connecting module 312. The connecting module 312 may be connected to or comprised in the tracking module 304.

The reason to connect the inactive first object track to the second active object track is that the probability is high that the two objects that have been moving together will keep moving together even if the first object was not detected. Thereby, the motion of the first object will be predicted by the movement of the second object. Further, if the temporally occluded first object reappears in a subsequent image frame it is likely that the first object will be detected close to the second object in the subsequent image frame. As long as the inactive object track is connected to the active object track, it will be kept even if a time-out period expires, at which time-out period inactive object tracks unconnected to an active object track would be deleted. Thus, the inactive object track connected to the active object track can be revived, i.e. made active again, even after the expiry of the time-out period. This results in a longer acceptable occlusion time for objects that keep moving together and makes it more likely that the occluded/undetected first object is associated with the first inactive object track later on when an instance of it is detected in a subsequent frame. However, a maximum time-out period may be set to determine within which time period an inactive object track connected to an active object track can be revived. Such an inactive object track connected to an active object track may be referred to as an inactive and connected object track for which the time-out period is increased to be the maximum time-out period. If the inactive and connected object track has not been revived after expiry of the maximum time-out period, the inactive and connected object track is deleted. For example, after expiry of the time-out period, the inactive and connected object track may be kept for the maximum time-out period, and if the inactive and connected object track has not become active within that maximum time-out period it is deleted. The maximum time-out period may be set in relation to an assumed time length of the temporally occlusion of the occluded object. Depending on the circumstances, it may not make sense to keep inactive and connected object tracks alive for e.g. hours or days if it gives the occluded object the opportunity to change appearance (e.g. clothes) so that a subsequent detected object instance of that object with changed appearance would not match any of the object instances of that object's inactive and connected object track.

In the subsequent procedure, one or more subsequent image frames, which are captured at points in time after the time point for the capture of the current image frame, are analysed to detect one or more subsequent instances of objects which potentially could be instances of the occluded first object. Thus, in **action 410,** one or more subsequent instances of objects are detected in a subsequent image frame subsequent of the current image frame. The wording subsequent instances of objects refers to the fact that the instances of objects are detected in a subsequent image frame and thus are detected later in time than the detected instances referred to above in connection to action 402. Figure 2B also illustrates that at **a time point t8** four subsequent **object instances 220, 222, 224, 226** are detected, and that one of them, i.e. the first subsequent object instance 220, has been associated with the active second object track 212 since it has been concluded that it was an instance of the second object.

When performing object tracking it may be prioritized to first try to associate a detected subsequent object instance with an active object track. Thus, it may be prioritized to first compare the detected subsequent object instance, e.g. the feature vector of the detected subsequent object instance, with one or more object instances, e.g. one or more feature vectors, of the active object track, and to associate the detected subsequent object instance with the active object track if the compared object instances, e.g. the compared feature vectors, fulfill a similarity or distance condition, e.g. a similarity requirement. If the detected subsequent object instance could not be associated to an active object track, it could be a detection of a previously tracked object that has been temporarily occluded and now reappears in an image frame. Therefore, as a second step in a prioritization order, it is tried to associate the detected subsequent object instance with an inactive object track connected to an active object track, i.e. with an inactive and connected object track. If such association is unsuccessful due to the object instances or feature vectors being compared do not fulfill the similarity or distance condition, then in a third step, the detected subsequent object instance is tried to be associated to an inactive object track not being connected to an active object track. If also that association attempt fails, as a last step in the prioritization order, a new (active) object tack is created based on the detected subsequent object instance. The present invention relates especially to the second step handling the case when a tracked object has been occluded/undetectable in a number of image frames and then is detectable again in an image frame. Even if the second and third steps have been described as consecutive steps, it should be understood that they may be performed concurrently. For example, all inactive object tracks may be considered at the same time irrespective of whether they are connected to an active object track or not. In such case, the inactive object tracks may be ranked based on how close the detected subsequent object instance is to the inactive object track and based on how similar it is to an object instance of the inactive object track (or how similar its feature vector is to one or more feature vectors of the inactive object track), and then the detected subsequent object instance is tried to be associated with one of the inactive object tracks in a ranking order.

As will be described below, one of the other detected subsequent object instances 222, 224, 226 may belong to an object, e.g. the first object, that has been occluded/undetected for some time but now has been detected in the subsequent image frame.

The detecting (action 410) of one or more subsequent object instances in a subsequent image frame may be performed by the detecting module (e.g. the object detector) 306.

In **action 412,** a detected subsequent object instance is associated with an inactive object track when a similarity score between the detected subsequent object instance and one or more object instances of the inactive object track fulfills a similarity requirement. The similarity score may be determined between a feature vector of the detected subsequent object instance and one or more feature vectors of the inactive object track. For the purpose of determining the similarity score, any known similarity measure may be used, including cosine similarity and the inverse of Euclidean distance. The one or more feature vectors of the inactive object track may be feature vectors of a respective detected object instance making up the inactive object track and may be stored in a set of feature vectors representative of the inactive object track. Thus, the feature vector of the detected subsequent object instance may be compared with one or more of the stored feature vectors. For example, in case several comparisons are made with a plurality of the stored feature vectors for the inactive object track, a majority of the comparisons should fulfill the similarity requirement to allow the detected subsequent object instance to be associated with the inactive object track. As another example, in case a comparison is made with a single feature vector for the inactive object track, that feature vector may be a mean feature vector or a median feature vector determined based on the set of stored feature vectors for the inactive object track or a subset thereof.

The associating (action 412) of a detected subsequent object instance with an inactive object track may be performed by the tracking module, e.g. the object tracker, 304. The process performed may be referred to as re-identification process since the detected subsequent object instance has not appeared in an image frame for a time period and now reappears in a subsequent image frame.

In order to be more prone to associate a detected subsequent object instance with an object track that is inactive and that is connected to a nearby active object track, the similarity requirement used when comparing the detected subsequent object instance (or a feature vector thereof) with one or more object instances of the inactive and connected object track (or with one or more feature vectors thereof) is made more permissive, i.e. made less strict, when the detected subsequent object instance is spatially proximate to the active object track. Especially, the similarity requirement is less strict as compared to the similarity requirement used when the comparison is made between the detected subsequent instance and an inactive object track not being connected to an active object track. Thus, the method is more tolerant to associate the detected subsequent object instance with an inactive object track connected to a nearby active object track than with an unconnected inactive object track. With reference to Figure 2B, the method would be more tolerant to associate the second detected object instance 222 with the inactive first object track 210 connected to the active second object track 212 than to associate the second detected object instance 222 with inactive third object track 216 unconnected to an active object track since the second detected object instance 222 is closer than a threshold distance to the active second object track 212.

In other words, the similarity requirement is less strict when the detected subsequent object instance is spatially proximate to the active second object track and when the detected subsequent object instance is compared to one or more object instances of the inactive first object track connected to the active second object track as compared to when the detected subsequent object instance is compared to one or more object instances of an inactive object track unconnected to the active second object track. The comparison may be made between a feature vector of the detected subsequent object instance and one of more feature vectors of the one or more object instances of the inactive object track.

The determination of whether the detected subsequent object instance is spatially proximate to the active second object track can be performed in different ways. For example, the detected subsequent object instance is determined to be spatially proximate to the active second object track when an instance distance between the detected subsequent object instance and one or more instances of the active second object track is determined to be below a proximate threshold. In case several different instance distances are obtained between the detected object instance and a plurality of the instances of the active second object track, at least one of them has to be below the proximate threshold in order to conclude that the detected subsequent object instance is spatially proximate to the active second object track.

The term "instance distance" is used herein to differentiate the distance, which is a distance between an object instance and the active second object track, from a distance between feature vectors, which distance is also described herein. The latter distance is in this disclosure referred to as a "feature distance". As understood by the person skilled in the art, the distance, i.e. the instance distance and/or the feature distance, may be a spatial distance, an LP-distance such as a Euclidean distance, just to give some examples.

In some embodiments, the similarity requirement is less strict the smaller the instance distance is between the detected subsequent object instance and the one or more instances of the active second object track. Thus, the similarity requirement will be more permissive for associating the detected subsequent object instance with the inactive first object track the closer the detected subsequent instance is to the active second object track to which the inactive first object track is connected. For example and with reference to Figure 2B, the method would be more tolerant to associate the second detected object instance 222 with the inactive first object track 210 connected to the active second object track 212 than to associate the third detected object instance 224 with the inactive first object track 210 since the second detected object instance 222 is closer to the active second object track 212 than the third detected object instance 224. This is especially advantageous since the closer the detected subsequent object instance is to the active second object track the more likely the detected subsequent object instance relates to the occluded first object moving together with the second object.

As mentioned, the instance distance is determined between the detected subsequent object instance and the one or more object instances of the active second object track. Since only one of the one or more object instances of the active second object track may be temporally closest to the detected subsequent object instance it is understood that the instance distance may be determined by comparing the detected subsequent object instance with the temporally closest object instance of the active second object track or with one or more object instances of the active second object track that are temporally more distant from the detected subsequent object instance than the temporally closest object instance. **Figure 2C****,** corresponding to Figure 2B, schematically illustrates a second subsequent object instance 222' detected at a time t8 and being closest to the sixth object instance 228 of the active second object track 212, which sixth object instance 228 was detected at a temporally more distant time t6 than the temporally closest detected object instance 220 of the active second object track 212. Thus, in figure 2C, the smallest instance distance is between the second subsequent object instance 222' and the detected sixth object instance 228.

In addition, the similarity requirement may be made less strict for a subsequent instance detected along the (assumed) direction of movement of the inactive first object track or along the direction of movement of the active second object track as compared to a subsequent instance detected off the direction of the movement. For example, if the second subsequent object instance 222' and a fourth subsequent object instance 226' is detected as illustrated in Figure 2C and both of them are assumed to be at the same instance distance from the active second object track 212, the similarity requirement would be less strict for the second subsequent object instance 222' than for the fourth subsequent object instance 226', since the second subsequent object instance 222' is detected along an assumed movement direction (indicated as a dotted line 230) of the inactive first object track 210 while the fourth subsequent object instance 226' is neither detected along the movement direction 230 of the inactive first object track 210 nor along the direction of movement of the active second object track 212.

Information about the scene may also be taken into consideration when determining the similarity requirement. For example, if the scene comprises a pavement and if the first and second objects have been determined to move together on the pavement before the first object became occluded, the similarity requirement could be made less strict for a subsequent object instance detected close to the second object track and on the pavement as compared to a subsequent object instance detected outside the pavement since it is more likely that objects continue to move together.

In some embodiments, the similarity score fulfills the similarity requirement when the similarity score is equal to or above a similarity threshold. A less strict similarity requirement may be obtained by reducing the similarity threshold or increasing the similarity score. The similarity score may be calculated from the feature vector distance between a feature vector of the detected subsequent object instance and one or more feature vectors of the object track with which the comparison is being made. Generally, a smaller feature vector distance corresponds to a larger similarity score. For example, the similarity score may be determined as (1 - the feature vector distance). Alternatively, the similarity score may be determined as 1/(1 + the feature vector distance). Sometimes the similarity score is scaled to obtain a value between 0 and 1, wherein a similarity score of 0 indicates no similarity and a similarity score of 1 indicates identity.

The similarity threshold or the similarity score may be reduced or increased in different ways. For example, in some embodiments the method comprises the action of determining a scaling factor based on an instance distance between the detected subsequent object instance and one or more object instances of the object track with which object track comparison is made, wherein the scaling factor is in the range between 0 for a smallest instance distance and 1 for a largest instance distance. In such embodiments, the reducing of the similarity threshold or the increasing of the similarity score comprises reducing the similarity threshold by multiplying the similarity threshold with the scaling factor or increasing the similarity score by multiplying the similarity score with the inverse of the scaling factor. Thereby, an adjustment of the similarity requirement proportional to the instance distance will be accomplished which will favor the detected subsequent object instance being closest to the active second object track when associating a detected subsequent object instance to the inactive first object track. Consequently, incorrect matches far away from the active second object track is avoided since it is unlikely that the first object would appear far away from the active second object track in the image frame. In this way objects moving close to each other and giving rise to imperfect detections can still be tracked and re-identified between different camera/sensor views, whereby the tracking and re-identification performance is improved.

The feature vector similarity between the feature vectors being compared may be determined in different ways. As previously mentioned, several feature vectors may have been stored for each object track and thus the feature vector of the detected subsequent object instance may be compared with one or more of the stored feature vectors for an object track to determine a feature vector distance. The smaller the determined feature vector distance is, the larger is the feature vector similarity. Thus, there is an inverse relationship between the feature vector similarity and the feature vector distance. For example, in some embodiments, the feature vector similarity between the feature vectors being compared is one out of a largest feature vector similarity between the feature vector of the detected subsequent object instance and the one or more feature vectors of the object track, and a median feature vector similarity between the feature vector of the detected subsequent object instance and the one or more feature vectors of the object track. As another example, the feature vector similarity may be a mean feature vector similarity between the feature vector of the detected subsequent object instance and the one or more feature vectors of the object track. As further examples, other statistics measures, such as N-quantile, may be used for determining the feature vector similarity.

The inactive first object track is kept inactive as long as it is connected with the active second object track and as long as it has not been associated with a detected subsequent object instance. Thereby, the first object can be occluded for a long time period and still be associated with the inactive first object track once it reappears and is detected in a subsequent image frame. When an object instance in a subsequent image frame is associated with the inactive object track, the inactive object track is reactivated and disconnected from the active second object track. Thus, the method may further comprise the actions of re-activating the inactive first object track when the detected subsequent object instance is associated with the inactive first object track, and disconnecting the re-activated first object track from the active second object track.

Among the object tracks determined in action 402, some object tracks may be identified as inactive object tracks not being connected to an active object track. According to some embodiments, the method further comprises deleting, after a time-out period, an inactive object track unconnected to an active object track. If an inactive object track unconnected to an active object track has not been associated with a new detected object instance within the time-out period it is assumed that the tracked object is not present in the scene anymore and therefore the object track should be deleted and not used as a candidate track for association in the tracking procedure.

**Figure 5** schematically illustrates a system 500 for tracking a temporarily occluded object in a plurality of image frames 200 depicting the scene 100. The system 500 comprises one or more image sensors 110; 110-1, 110-2, 110-3, 110-4, 110-5 configured to capture image frames 200 of the scene 100. One or more of the image sensors may be comprised in one or more imaging devices 120; 120-1, 120-2, 120-3. The apparatus 300 for tracking a temporarily occluded object in a plurality of image frames 200 depicting the scene 100 may be connected directly to each one of the one or more imaging devices 110, or the apparatus 300 and the one or more imaging devices 110 may be connected to each other over the communications network 502. As illustrated, the one or more imaging devices may be connected to a communications network 502, and eventually to a client 504 and/or a server 506, also connected to the network 502. The client 504 may transmit instructions to the one or more imaging devices and to the apparatus 300, and the one or more imaging devices 120 transfer sequences of captured image frames to the apparatus 300, the client 504 and/or the server 506. The client 504 may have a display where an operator can view images and/or video streams from the one or more imaging devices. Typically, the client 504 is also connected to the server 506 where the images and/or video streams can be stored and/or processed further. The connections between the components of the system may be realised as wired connections, wireless connections or as a combination of wired and wireless connections.

## Claims

1. A method for tracking a temporarily occluded object in a plurality of image frames (200) depicting a scene (100), comprising:
- tracking (402) objects in image frames (200-1, 200-2) of the plurality of image frames (200), by detecting instances of objects in the image frames and associating detected instances into object tracks, wherein an object track is active when being associated with detected instances of an object in the image frames and wherein an active object track becomes inactive when it is not associated with a detected instance of an object in one or more image frames;
- identifying (404), among the object tracks, an active first object track of detected instances of a first object (102) and an active second object track of detected instances of a second object (104), which first and second objects are moving together in the scene;
- determining (406) that the first object track, but not the active second object track, has become inactive for a current image frame (200-3, 200-4) due to not being associated with a detected instance of the first object (102) in one or more image frames;
- connecting (408) the inactive first object track to the active second object track;
- detecting (410), in a subsequent image frame (200-5, 200-6) subsequent of the current image frame (200-3, 200-4), one or more subsequent instances of objects; and
- associating (412) a detected subsequent object instance with an inactive object track when a similarity score between the detected subsequent object instance and one or more object instances of the inactive object track fulfills a similarity requirement, wherein:
the similarity requirement is less strict when the detected subsequent object instance is spatially proximate to the active second object track and when the detected subsequent object instance is compared to one or more object instances of the inactive first object track connected to the active second object track as compared to when the detected subsequent object instance is compared to one or more object instances of an inactive object track unconnected to the active second object track.

2. The method of claim 1, wherein the detected subsequent object instance is spatially proximate to the active second object track when an instance distance between the detected subsequent object instance and one or more object instances of the active second object track is determined to be below a proximate threshold.

3. The method of claim 2, wherein the similarity requirement is less strict the smaller the instance distance is between the detected subsequent object instance and the one or more object instances of the active second object track.

4. The method of any one of claim 1-3, wherein the similarity score fulfills the similarity requirement when the similarity score is equal to or above a similarity threshold, and wherein the method further comprises:
- when the similarity requirement is to be less strict, reducing the similarity threshold or increasing the similarity score.

5. The method of claim 4, further comprising:
- determining a scaling factor based on an instance distance between the detected subsequent object instance and one or more instances of the object track with which object track comparison is made, wherein the scaling factor is in the range between 0 for a smallest instance distance and 1for a largest instance distance;
- wherein the reducing of the similarity threshold or the increasing of the similarity score comprises reducing the similarity threshold by multiplying the similarity threshold with the scaling factor or increasing the similarity score by multiplying the similarity score with the inverse of the scaling factor.

6. The method of any one of claim 1-5, wherein the similarity score is determined as a feature vector similarity between a feature vector of the detected subsequent object instance and one or more feature vectors of the inactive object track.

7. The method of claim 6, wherein the feature vector similarity is one out of:
- a largest feature vector similarity between the feature vector of the detected subsequent object instance and the one or more feature vectors of the object track; and
- a median feature vector similarity between the feature vector of the detected subsequent object instance and the one or more feature vectors of the object track.

8. The method of any one of claim 1-7, further comprising:
- determining that the first and second objects (102, 104) are moving together in the scene (100) when the first and second object tracks, during a same period in time, are located in proximity to each other and have a similar trajectory.

9. The method of claim 8, further comprising:
- determining that the first and second object tracks are located in proximity to each other by:
determining a spatiotemporal overlap between at least one detection area of a detected object instance in the first object track and a detection area of a detected object instance in the second object track; or by
determining that a pixel distance between a centre point of one or more detected object instances of the first object track and a centre point of one or more detected object instance in the second object track is below a predefined pixel distance threshold.

10. The method of claim 9, wherein the spatiotemporal overlap or the centre point distance is determined for detected object instances in the current image frame or in one or more preceding image frames preceding the current image frame.

11. The method of any one of claim 1-10, wherein the inactive first object track is kept inactive as long as it is connected with the active second object track and as long as it has not been associated with a detected subsequent object instance.

12. The method of any one of claim 1-11, further comprising:
- re-activating the inactive first object track when the detected subsequent object instance is associated with the inactive first object track, and
- disconnecting the re-activated first object track from the active second object track.

13. The method of any one of claim 1-12, further comprising:
- deleting, after a time-out period, an inactive object track unconnected to an active object track, and
- deleting, after a maximum time-out period, an inactive and connected object track.

14. The method of any one of claim 1-13, wherein the plurality of images (200) is captured by one image sensor (110) registering image data from a single field of view (112) of the scene (100) or by a plurality of image sensors (110-1, ..., 110-5) registering image data from a plurality of fields of view (112-1, ..., 112-5) of the scene (100).

15. An apparatus (300) for tracking a temporarily occluded object in a plurality of image frames depicting a scene, comprising circuitry (302) configured to carry out the method of any one of claims 1-14.

16. A non-transitory computer-readable medium comprising computer program code which, when executed by a device with processing capability, causes the device to carry out the method of any one of claims 1-14.

## Patentansprüche

1. Verfahren zum Verfolgen eines vorübergehend verdeckten Objekts in mehreren Bild-Frames (200), die eine Szene (100) darstellen, welches Folgendes umfasst:
- Verfolgen (402) von Objekten in Bild-Frames (200-1, 200-2) der mehreren Bild-Frames (200) durch Detektieren von Instanzen von Objekten in den Bild-Frames und Assoziieren detektierter Instanzen zu Objektspuren, wobei eine Objektspur aktiv ist, wenn sie mit detektierten Instanzen eines Objekts in den Bild-Frames assoziiert ist, und wobei eine aktive Objektspur inaktiv wird, wenn sie nicht mit einer detektierten Instanz eines Objekts in einem oder mehreren Bild-Frames assoziiert ist;
- Identifizieren (404), unter den Objektspuren, einer aktiven, ersten Objektspur detektierter Instanzen eines ersten Objekts (102) und einer aktiven, zweiten Objektspur detektierter Instanzen eines zweiten Objekts (104), wobei sich das erste und zweite Objekt zusammen in der Szene bewegen;
- Bestimmen (406), dass die erste Objektspur, aber nicht die aktive, zweite Objektspur, für einen aktuellen Bild-Frame (200-3, 200-4) inaktiv geworden ist, weil sie nicht mit einer detektierten Instanz des ersten Objekts (102) in einem oder mehreren Bild-Frames assoziiert ist;
- Verbinden (408) der inaktiven, ersten Objektspur mit der aktiven, zweiten Objektspur;
- Detektieren (410), in einem anschließenden Bild-Frame (200-5, 200-6) anschließend an den aktuellen Bild-Frame (200-3, 200-4), einer oder mehrerer anschließender Instanzen von Objekten; und
- Assoziieren (412) einer detektieren anschließenden Objektinstanz mit einer inaktiven Objektspur, wenn eine Ähnlichkeitsbewertung zwischen der detektierten anschließenden Objektinstanz und einer oder mehreren Objektinstanzen der inaktiven Objektspur eine Ähnlichkeitsanforderung erfüllt, wobei:
die Ähnlichkeitsanforderung weniger streng, wenn die detektierte anschließende Objektinstanz räumlich nahe zu der aktiven, zweiten Objektspur ist und wenn die detektierte anschließende Objektinstanz mit einer oder mehreren Objektinstanzen der inaktiven, ersten Objektspur verglichen wird, die mit der aktiven, zweiten Objektspur verbunden ist, im Vergleich dazu ist, wenn die detektierte anschließende Objektinstanz mit einer oder mehreren Objektinstanzen einer inaktiven Objektspur verglichen wird, die nicht mit der aktiven, zweiten Objektspur verbunden ist.

2. Verfahren nach Anspruch 1, wobei die detektierte anschließende Objektinstanz räumlich nahe zu der aktiven, zweiten Objektspur ist, wenn eine Instanzentfernung zwischen der detektierten anschließenden Objektinstanz und einer oder mehreren Objektinstanzen der aktiven, zweiten Objektspur als unterhalb einer Näherungsschwelle liegend bestimmt wird.

3. Verfahren nach Anspruch 2, wobei die Ähnlichkeitsanforderung umso weniger streng ist, je kleiner die Instanzentfernung zwischen der detektierten anschließenden Objektinstanz und der einen oder den mehreren Objektinstanzen der aktiven, zweiten Objektspur ist.

4. Verfahren nach einem der Ansprüche 1-3, wobei die Ähnlichkeitsbewertung die Ähnlichkeitsanforderung erfüllt, wenn die Ähnlichkeitsbewertung gleich oder oberhalb einer Ähnlichkeitsschwelle ist, und wobei das Verfahren ferner Folgendes umfasst:
- wenn die Ähnlichkeitsanforderung weniger streng sein soll, Reduzieren der Ähnlichkeitsschwelle oder Erhöhen der Ähnlichkeitsbewertung.

5. Verfahren nach Anspruch 4, das ferner Folgendes umfasst:
- Bestimmen eines Skalierungsfaktors basierend auf einer Instanzentfernung zwischen der detektierten anschließenden Objektinstanz und einer oder mehreren Instanzen der Objektspur, mit der ein Objektspurvergleich vorgenommen wird, wobei der Skalierungsfaktor in dem Bereich zwischen 0 für eine kleinste Instanzentfernung und 1 für eine größte Instanzentfernung liegt;
- wobei das Reduzieren der Ähnlichkeitsschwelle oder das Erhöhen der Ähnlichkeitsbewertung Reduzieren der Ähnlichkeitsschwelle durch Multiplizieren der Ähnlichkeitsschwelle mit dem Skalierungsfaktor oder Erhöhen der Ähnlichkeitsbewertung durch Multiplizieren der Ähnlichkeitsbewertung mit dem Kehrwert des Skalierungsfaktors umfasst.

6. Verfahren nach einem der Ansprüche 1-5, wobei die Ähnlichkeitsbewertung als eine Merkmalvektorähnlichkeit zwischen einem Merkmalvektor der detektierten anschließenden Objektinstanz und einem oder mehreren Merkmalvektoren der inaktiven Objektspur bestimmt wird.

7. Verfahren nach Anspruch 6, wobei die Merkmalvektorähnlichkeit eine von Folgenden ist:
- eine größte Merkmalvektorähnlichkeit zwischen dem Merkmalvektor der detektierten anschließenden Objektinstanz und dem einen oder den mehreren Merkmalvektoren der Objektspur; und
- eine Medianmerkmalvektorähnlichkeit zwischen dem Merkmalvektor der detektierten anschließenden Objektinstanz und dem einen oder den mehreren Merkmalvektoren der Objektspur.

8. Verfahren nach einem der Ansprüche 1-7, das ferner Folgendes umfasst:
- Bestimmen, dass sich das erste und zweite Objekt (102, 104) zusammen in der Szene (100) bewegen, wenn die erste und zweite Objektspur während eines gleichen Zeitraums nahe zueinander lokalisiert sind und eine ähnliche Trajektorie aufweisen.

9. Verfahren nach Anspruch 8, das ferner Folgendes umfasst:
- Bestimmen, dass die erste und zweite Objektspur in der Nähe zueinander lokalisiert sind, durch Folgendes:
Bestimmen einer räumlich-zeitlichen Überlappung zwischen wenigstens einem Detektionsbereich einer detektierten Objektinstanz in der ersten Objektspur und einem Detektionsbereich einer detektierten Objektinstanz in der zweiten Objektspur; oder durch
Bestimmen, dass eine Pixelentfernung zwischen einem Mittelpunkt einer oder mehrerer detektierter Objektinstanzen der ersten Objektspur und einem Mittelpunkt einer oder mehrerer detektierter Objektinstanzen in der zweiten Objektspur unterhalb einer vordefinierten Pixelentfernungsschwelle liegt.

10. Verfahren nach Anspruch 9, wobei die räumlich-zeitliche Überlappung oder die Mittelpunktentfernung für detektierte Objektinstanzen in dem aktuellen Bild-Frame oder in einem oder mehreren vorhergehenden Bild-Frames, die dem aktuellen Bild-Frame vorhergehen, bestimmt wird.

11. Verfahren nach einem der Ansprüche 1-10, wobei die inaktive, erste Objektspur inaktiv gehalten wird, so lange sie mit der aktiven, zweiten Objektspur verbunden ist und so lange sie nicht mit einer detektierten anschließenden Objektinstanz assoziiert wurde.

12. Verfahren nach einem der Ansprüche 1-11, das ferner Folgendes umfasst:
- Reaktivieren der inaktiven, ersten Objektspur, wenn die detektierte anschließende Objektinstanz mit der inaktiven, ersten Objektspur assoziiert ist, und
- Trennen der reaktivierten, ersten Objektspur von der aktiven, zweiten Objektspur.

13. Verfahren nach einem der Ansprüche 1-12, das ferner Folgendes umfasst:
- Löschen, nach einer Zeitüberschreitungsperiode, einer inaktiven Objektspur, die nicht mit einer aktiven Objektspur verbunden ist, und
- Löschen, nach einer maximalen Zeitüberschreitungsperiode, einer inaktiven und verbundenen Objektspur.

14. Verfahren nach einem der Ansprüche 1-13, wobei die mehreren Bilder (200) durch einen Bildsensor (110), der Bilddaten von einem einzigen Sichtfeld (112) der Szene (100) registriert, oder durch mehrere Bildsensoren (110-1, ..., 110-5), die Bilddaten von mehreren Sichtfeldern (112-1, ..., 112-5) der Szene (100) registrieren, erfasst werden.

15. Einrichtung (300) zum Verfolgen eines vorübergehend verdeckten Objekts in mehreren Bild-Frames, die eine Szene darstellen, welche eine Schaltungsanordnung (302) umfasst, die zum Ausführen des Verfahrens nach einem der Ansprüche 1-14 konfiguriert ist.

16. Nichttransitorisches computerlesbares Medium, das Computerprogrammcode umfasst, der, wenn er durch eine Vorrichtung mit einer Verarbeitungsfähigkeit ausgeführt wird, die Vorrichtung zum Ausführen des Verfahren nach einem der Ansprüche 1-14 veranlasst.

## Revendications

1. Procédé destiné à suivre un objet temporairement masqué dans une pluralité de trames d'image (200) représentant une scène (100), comprenant :
- le suivi (402) d'objets dans des trames d'image (200-1, 200-2) de la pluralité de trames d'image (200), par détection d'instances d'objets dans les trames d'image et association d'instances détectées en traces d'objets, une trace d'objet étant active lorsqu'elle est associée à des instances détectées d'un objet dans les trames d'image et une trace d'objet active devenant inactive lorsqu'elle n'est pas associée à une instance détectée d'un objet dans une ou plusieurs trames d'image ;
- l'identification (404), parmi les traces d'objets, d'une première trace d'objet active d'instances détectées d'un premier objet (102) et d'une deuxième trace d'objet active d'instances détectées d'un deuxième objet (104), lesquels premier et deuxième objets se déplacent ensemble dans la scène ;
- la détermination (406) que la première trace d'objet, mais pas la deuxième trace d'objet active, est devenue inactive pour une trame d'image courante (200-3, 200-4) en raison de sa non-association à une instance détectée du premier objet (102) dans une ou plusieurs trames d'image ;
- la liaison (408) de la première trace d'objet inactive à la deuxième trace d'objet active ;
- la détection (410), dans une trame d'image suivante (200-5, 200-6), ultérieure à la trame d'image courante (200-3, 200-4), d'une ou plusieurs instances suivantes d'objets ; et
- l'association (412) d'une instance d'objet suivante détectée à une trace d'objet inactive lorsqu'un score de similitude entre l'instance d'objet suivante détectée et une ou plusieurs instances d'objet de la trace d'objet inactive satisfait une exigence de similitude, dans lequel :
l'exigence de similitude est moins stricte lorsque l'instance d'objet suivante détectée est spatialement proche de la deuxième trace d'objet active et lorsque l'instance d'objet suivante détectée est comparée à une ou plusieurs instances d'objet de la première trace d'objet inactive liée à la deuxième trace d'objet active,
par rapport à une situation dans laquelle l'instance d'objet suivante détectée est comparée à une ou plusieurs instances d'objet d'une trace d'objet inactive non liée à la deuxième trace d'objet active.

2. Procédé de la revendication 1, dans lequel l'instance d'objet suivante détectée est spatialement proche de la deuxième trace d'objet active lorsqu'il est déterminé qu'une distance d'instance entre l'instance d'objet suivante détectée et une ou plusieurs instances d'objet de la deuxième trace d'objet active est inférieure à un seuil de proximité.

3. Procédé de la revendication 2 dans lequel, plus la distance d'instance entre l'instance d'objet suivante détectée et la ou les instances d'objet de la deuxième trace d'objet active est faible, moins l'exigence de similitude est stricte.

4. Procédé de l'une quelconque des revendications 1 à 3, le score de similitude satisfaisant l'exigence de similitude lorsque le score de similitude est égal ou supérieur à un seuil de similitude, et le procédé comprenant en outre :
- lorsque l'exigence de similitude doit être moins stricte, la diminution du seuil de similitude ou l'augmentation du score de similitude.

5. Procédé de la revendication 4, comprenant en outre :
- la détermination d'un facteur d'échelle en fonction d'une distance d'instance entre l'instance d'objet suivante détectée et une ou plusieurs instances de la trace d'objet avec laquelle la comparaison de trace d'objet est réalisée, le facteur d'échelle étant compris entre 0 pour une distance d'instance la plus petite et 1 pour une distance d'instance la plus grande ;
- dans lequel la diminution du seuil de similitude ou l'augmentation du score de similitude comprend la diminution du seuil de similitude par multiplication du seuil de similitude par le facteur d'échelle ou l'augmentation du score de similitude par multiplication du score de similitude par l'inverse du facteur d'échelle.

6. Procédé de l'une quelconque des revendications 1 à 5, dans lequel le score de similitude est déterminé comme une similitude de vecteurs caractéristiques entre un vecteur caractéristique de l'instance d'objet suivante détectée et un ou plusieurs vecteurs caractéristiques de la trace d'objet inactive.

7. Procédé de la revendication 6, dans lequel la similitude de vecteurs caractéristiques en est une parmi :
- une similitude de vecteurs caractéristiques la plus grande entre le vecteur caractéristique de l'instance d'objet suivante détectée et le ou les vecteurs caractéristiques de la trace d'objet ; et
- une similitude de vecteurs caractéristiques médiane entre le vecteur caractéristique de l'instance d'objet suivante détectée et le ou les vecteurs caractéristiques de la trace d'objet.

8. Procédé de l'une quelconque des revendications 1 à 7, comprenant en outre :
- la détermination que les premier et deuxième objets (102, 104) se déplacent ensemble dans la scène (100) lorsque les première et deuxième traces d'objets, sur un même laps de temps, se trouvent à proximité l'un de l'autre et ont une trajectoire similaire.

9. Procédé de la revendication 8, comprenant en outre :
- la détermination que les première et deuxième traces d'objets se trouvent à proximité l'une de l'autre par :
détermination d'un chevauchement spatiotemporel entre au moins une zone de détection d'une instance d'objet détectée dans la première trace d'objet et une zone de détection d'une instance d'objet détectée dans la deuxième trace d'objet ; ou par
détermination qu'une distance entre pixels entre un point central d'une ou plusieurs instances d'objet détectées de la première trace d'objet et un point central d'une ou plusieurs instances d'objet détectées dans la deuxième trace d'objet est inférieure à un seuil de distance entre pixels prédéfini.

10. Procédé de la revendication 9, dans lequel le chevauchement spatiotemporel ou la distance entre points centraux sont déterminés pour des instances d'objets détectées dans la trame d'image courante ou dans une ou plusieurs trames d'image précédentes précédant la trame d'image courante.

11. Procédé de l'une quelconque des revendications 1 à 10, dans lequel la première trace d'objet inactive est maintenue inactive tant qu'elle est liée à la deuxième trace d'objet active et tant qu'elle n'a pas été associée à une instance d'objet suivante détectée.

12. Procédé de l'une quelconque des revendications 1 à 11, comprenant en outre :
- la réactivation de la première trace d'objet inactive lorsque l'instance d'objet suivante détectée est associée à la première trace d'objet inactive, et
- la déconnexion de la première trace d'objet réactivée de la deuxième trace d'objet active.

13. Procédé de l'une quelconque des revendications 1 à 12, comprenant en outre :
- la suppression, après un délai d'attente, d'une trace d'objet inactive non liée à une trace d'objet active, et
- la suppression, après un délai d'attente maximal, d'une trace d'objet inactive et liée.

14. Procédé de l'une quelconque des revendications 1 à 13, dans lequel la pluralité d'images (200) est capturée par un capteur d'images (110) enregistrant des données d'image depuis un seul champ de vision (112) de la scène (100) ou par une pluralité de capteurs d'images (110-1, ..., 110-5) enregistrant des données d'image depuis une pluralité de champs de vision (112-1, ..., 112-5) de la scène (100).

15. Appareil (300) destiné à suivre un objet temporairement masqué dans une pluralité de trames d'image représentant une scène, comprenant des circuits (302) conçus pour réaliser le procédé de l'une quelconque des revendications 1 à 14.

16. Support non transitoire lisible par ordinateur comprenant un code de programme informatique qui, lors de son exécution par un dispositif doté d'une capacité de traitement, amène le dispositif à réaliser le procédé de l'une quelconque des revendications 1 à 14.
